# DEMANDE DE BREVET EUROPEEN

(11) **EP 1 056 257 A1**
(43) Date de publication de la demande: **29.11.2000**
(21) Numéro de dépôt: 00401449.4
(22) Date de dépôt: 24.05.2000
(51) Int. Cl.: H04L 29/06, H04L 12/58

(54) **Système de diffusion de séquences audiovisuelles par messagerie électronique**

(30) Priorité: 25.05.1999 FR 9906583
(71) Demandeur: FRANCE TELECOM, 75015 Paris (FR)
(72) Inventeur: Reiter, Pascal, Cabinet Ballot-Schmit, 94230 Cachan (FR); Thiel, Chantal, Cabinet Ballot-Schmit, 94230 Cachan (FR); Didelot, Gilles, Cabinet Ballot-Schmit, 94230 Cachan (FR)
(74) Mandataire: Ballot, Paul

(57) **Abrégé**

L'invention concerne un système de diffusion de séquences audiovisuelles par messagerie électronique sur un réseau IP. Le système selon l'invention comporte:
- un dispositif (SD) pour le stockage et la diffusion de séquences audiovisuelles pré-enregistrées,
- au moins un poste de travail (PW1) comportant un terminal de visioconférence pour l'acquisition desdites séquences, ou un téléphone pour l'acquisition des séquences audio pures, l'enregistrement et la transmission au dispositif (SD),
- un ou plusieurs équipements informatiques (Eq1, Eqk) susceptibles de recevoir les séquences audiovisuelles par messagerie électronique à travers le réseau IP.

## Description

L'invention concerne un système de diffusion de séquences audiovisuelles par messagerie électronique.

L'état de la technique existant à ce jour propose la diffusion de fichiers contenant ou faisant référence à une séquence audiovisuelle par messagerie. Pour cela, plusieurs solutions sont proposées.

La première solution est l'envoi de fichiers AVI (Audio Video Interlaced), une autre solution est l'envoi de fichiers de type 〈〈 Real Player 〉〉.

La première solution est limitée car l'envoi par messagerie ne permet pas de transfert de fichiers de taille importante (généralement supérieure à 2 Mbits), ce qui est le cas des séquences AVI (qui font plusieurs dizaines et même centaines de Mbits).

La deuxième solution est plus intéressante car on peut envoyer un fichier ne contenant qu'une adresse de l'endroit d'où la vidéo extraite en continu pourra être consultée.

Cette solution, tout comme la première, nécessite que la vidéo initiale soit préalablement codée et stockée. Or, cette opération de codage est très vite inexploitable dans le cas d'une messagerie audiovisuelle.

En effet, il est nécessaire pour cela que toute personne désirant envoyer des images vidéo par messagerie, s'équipe d'une carte d'acquisition, d'une caméra, et d'un logiciel permettant l'encodage. La logistique nécessaire rend cette solution très complexe et donc hors de portée des utilisateurs, tout du moins empêchant une généralisation. Il s'agit par contre d'une solution bien adaptée au codage de séquences audiovisuelles télédiffusées ou issues de cassettes vidéo, le codage étant réalisé de manière centralisée par un opérateur ou une équipe d'exploitation.

La présente invention permet de résoudre ce problème.

Elle a pour objet un système de diffusion de séquences audiovisuelles ne faisant pas intervenir de modifications matérielles dans les équipements informatiques existants.

La solution proposée permet d'apporter une solution simple utilisant des équipements existant dans de plus en plus d'entreprises, à savoir les terminaux de visioconférence.

La présente invention a plus particulièrement pour objet un système de diffusion de séquences audiovisuelles par messagerie électronique sur un réseau IP, principalement caractérisé en ce qu'il comprend :
- un dispositif SD de stockage et de diffusion de séquences audiovisuelles pré-enregistrées,
- au moins un poste de travail PW1 comportant un terminal de visioconférence pour l'acquisition desdites séquences audiovisuelles, et/ou un téléphone T pour l'acquisition des séquences audio pures, l'enregistrement et la transmission au dispositif SD,
- un ou plusieurs équipements informatiques Eq1, Eqk susceptibles de recevoir les séquences audiovisuelles par messagerie électronique à travers le réseau IP.

Selon un mode de réalisation de l'invention, le dispositif SD de stockage et de diffusion comprend :
- au moins un dispositif E1 pour l'encodage en un format de codage audiovisuel des séquences audiovisuelles provenant du (ou des) poste(s) de travail PW1 et la transmission au serveur SAV via le réseau IP,
- un serveur SAV de séquences audiovisuelles pour le stockage et la diffusion sur le réseau IP à destination des équipements informatiques des séquences audiovisuelles pré-enregistrées et encodées selon un format de codage audiovisuel.

Le dispositif E1 pour l'encodage des séquences audiovisuelles peut comprendre :
- au moins un terminal V1 de visioconférence pour le codage selon un format intermédiaire des séquences audiovisuelles émises par le poste de travail PW1,
- au moins un serveur SE1 pour l'encodage en un format de codage audiovisuel des séquences audiovisuelles provenant du (ou des) terminal(aux) V1 de visioconférence et la transmission au serveur SAV via le réseau IP.

Selon un autre mode de réalisation, le dispositif SD de stockage et de diffusion comprend :
- un serveur S de séquences audiovisuelles pour le stockage et la diffusion de séquences audiovisuelles préenregistrées selon le format de codage de la visioconférence,
- une passerelle P de transcodage des séquences audiovisuelles pour le transport sur réseau IP à destination des équipements électroniques.

La ou les séquences stockées sur le dispositif SD de stockage et de diffusion sont diffusées à la demande du ou des équipements informatiques, ledit ou lesdits équipements comportant un logiciel de connexion audit dispositif SD comprenant un numéro d'identification de ladite séquence pour l'ouverture d'une session permettant la consultation et le contrôle par l'utilisateur, de séquences audiovisuelles sur ledit dispositif SD.

A l'ouverture de la session par un équipement informatique, le logiciel de connexion permet d'afficher une image dans une fenêtre.

Dès que la connexion est établie, le dispositif de stockage et de diffusion transmet une image correspondant à une fenêtre dans laquelle s'affichent les images enregistrées.

Le logiciel de connexion est téléchargeable au moyen du réseau IP.

Selon un mode de réalisation de l'invention, le poste de travail PW1 comporte en outre un microordinateur multimedia Eqᵢ.

La transmission au dispositif SD peut être réalisée au moyen d'un réseau de transmission numérique à intégration de service, téléphonique commuté, IP ou radiomobile.

Le poste de travail PW1 comporte un logiciel de connexion au dispositif SD pour l'ouverture d'une session d'enregistrement et cette ouverture n'est autorisée qu'après vérification d'un mot de passe d'un intervenant.

L'invention concerne également un serveur de gestion d'un système de diffusion tel que décrit précédemment, caractérisé en ce qu'il comprend :
un dispositif d'accès au réseau pour échanger des informations et des commandes avec le système de diffusion,
un logiciel d'aide à l'intervenant,
un logiciel d'administration du système de diffusion.

Le logiciel d'aide à l'intervenant est apte à lancer l'encodage et le stopper et/ou à remettre dans la boite de messagerie électronique de l'intervenant un message électronique comportant en pièce jointe un fichier faisant référence à la séquence audiovisuelle enregistrée.

Le logiciel d'aide à l'intervenant est aussi apte à permettre la consultation de la liste des séquences audiovisuelles réalisées et leur visualisation et/ou la suppression de séquences audiovisuelles.

Avantageusement le logiciel d'aide à l'intervenant est aussi apte à permettre l'association d'un mot de passe aux séquences enregistrées n'autorisant la consultation qu'aux utilisateurs détenteurs de ce mot de passe.

Il est aussi apte à attacher un fichier à la séquence enregistrée sur le dispositif de stockage et de diffusion.

Le logiciel d'administration du système de diffusion est apte à associer un mot de passe d'un intervenant à l'ouverture d'une session d'enregistrement et à gérer les mots de passe.

Le logiciel d'administration du système de diffusion est aussi apte à gérer la durée de l'encodage et/ou à calculer la durée des séquences et/ou la durée de leur stockage et/ou à générer des statistiques.

Le dispositif d'accès au réseau est apte à télécharger le logiciel d'aide à l'intervenant (page Web) sur le poste PW1 de l'intervenant au moyen du réseau IP.

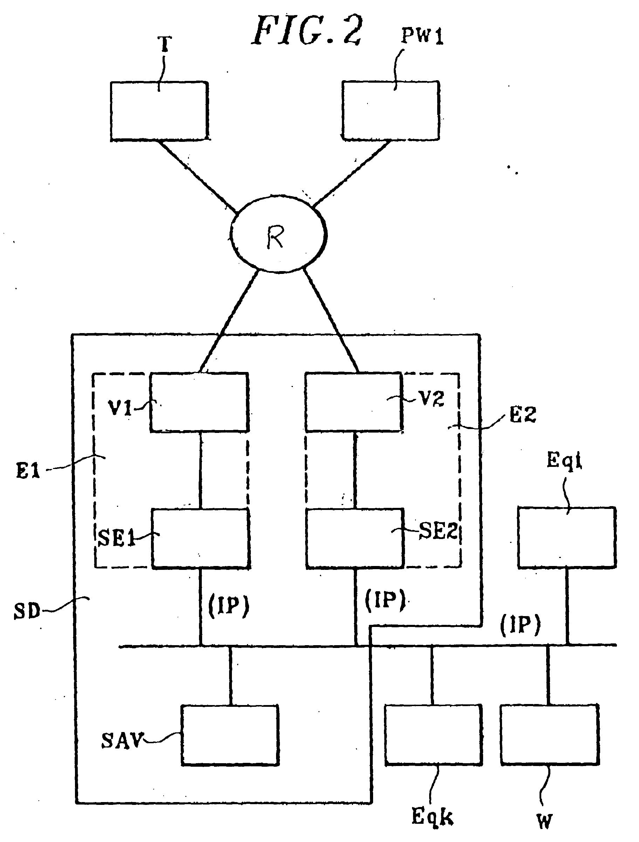

D'autres particularités et avantages de l'invention apparaîtront à la lecture de la description suivante qui est donnée à titre d'exemple non limitatif et en regard des figures annexées qui représentent :

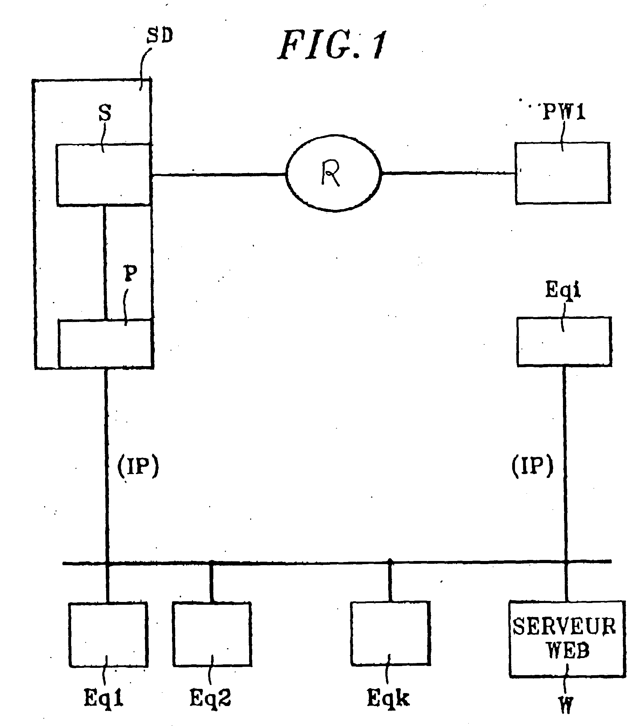

la figure 1, un schéma d'un mode de réalisation d'un système conforme à l'invention,
le figure 2, un schéma d'un autre mode de réalisation d'un système conforme à l'invention.

On entendra dans la suite par séquences audiovisuelles, le plus généralement des séquences audiovisuelles mais aussi des séquences purement audio voire purement visuelles.

Comme cela est illustré sur les figures 1 et 2, le système comporte un dispositif SD de séquences audiovisuelles. Ce dispositif SD permet de stocker et de diffuser à la demande les séquences audiovisuelles stockées préenregistrées par un utilisateur autorisé dénommé par la suite intervenant.

L'intervenant dispose à cette fin d'un poste de travail de visioconférence PW1 qui lui permet d'enregistrer la ou les séquences visiophoniques selon son besoin pour communiquer avec des personnes qui se trouvent dans son environnement de travail ou autre. Ces séquences peuvent être des séquences simplement audio enregistrées à partir du poste PW1 ou du poste téléphonique T de l'intervenant représenté figure 2.

Selon un mode de réalisation représenté figure 1, le dispositif SD comprend un serveur S et une passerelle P de transcodage. Ainsi, les séquences filmées sont codées par le terminal de visioconférence selon le codage H320 et sont stockées sur le serveur S de séquences audiovisuelles après que l'intervenant ait effectué une connexion avec le serveur S.

Les autres utilisateurs destinataires qui ne sont pas nécessairement équipés d'un terminal de visioconférence, peuvent avec leur équipement informatique Eq1 (ou Eq2, etc) recevoir les séquences enregistrées en se connectant au serveur S. La diffusion des séquences visiophoniques est effectuée à travers une passerelle P qui est apte à assurer le transcodage des signaux H323/H320 ; le code H323 correspond au codage du signal pour le transport sur réseau IP (Internet Protocole).

Selon un autre mode de réalisation représenté figure 2, le dispositif SD comprend au moins un dispositif E1 pour l'encodage des séquences provenant du poste de travail PW1 et un serveur SAV de stockage et de diffusion des séquences audiovisuelles provenant du dispositif E1. On peut prévoir plusieurs dispositifs E1, E2, ... de manière à pouvoir satisfaire simultanément les demandes d'enregistrement de plusieurs intervenants.

Le dispositif E1 peut lui-même comporter un terminal de visioconférence V1 pour un codage en un format intermédiaire des séquences provenant du poste de travail PW1, et un serveur SE1 pour l'encodage des séquences provenant du terminal V1.

Ainsi après que l'intervenant ait effectué une connexion avec le terminal V1, les séquences filmées sont codées par le terminal de visioconférence PW1 selon le codage H320 ou H323, transitent par le terminal V1 où elles sont codées en un format intermédiaire, sont encodées par le serveur SE1 en un format de codage audiovisuel tel que 〈〈 RealEncoder 〉〉, 〈〈 MPEG 〉〉, 〈〈 NetShow 〉〉, ..., et sont stockées sur le serveur SAV de séquences audiovisuelles.

Selon le premier mode de réalisation décrit, le stockage des séquences audiovisuelles est réalisé sur le réseau R ; le transcodage H320/H323 intervient après le stockage des séquences audiovisuelles et lors de la demande de consultation par les utilisateurs. Alors que selon le deuxième mode de réalisation décrit, l'encodage H320/format de codage audiovisuel ou H323/format de codage audiovisuel précède le stockage qui est alors réalisé sur le réseau IP.

Selon le premier mode de réalisation décrit, l'intervenant désirant effectuer des enregistrements de séquences audiovisuelles va pour cela procéder de la manière suivante :
- la connexion au serveur SD au moyen de son poste de travail PW1 de visioconférence, ce dernier étant relié à un boîtier de connexion (non représenté) au réseau R qui peut être le RNIS (réseau numérique à intégration de service), le RTC (cas d'une connexion téléphonique), un réseau IP (internet, intranet, extranet) ou un réseau radiomobile UMTS ;
   . cette connexion consiste pour l'utilisateur à lancer le programme d'appel du numéro téléphonique du serveur SD ;
- à la réception d'un signal de connexion, l'entrée d'un mot de passe qui lui a été affecté lors de son abonnement à ce service pour déclencher l'enregistrement ;
   . le mot de passe est entré au moyen d'un périphérique entrée-sortie de son poste de travail (clavier ou souris );
- au démarrage de l'enregistrement, l'utilisateur se présente et annonce son communiqué et utilise éventuellement des outils associés (caméra-document, magnétoscope). Lorsque la séquence est terminée, l'intervenant met fin à la communication visiophonique en raccrochant (déconnexion).

Selon le deuxième mode de réalisation décrit, l'intervenant désirant effectuer des enregistrements de séquences audiovisuelles va pour cela procéder de la manière suivante :
- la connexion au serveur SD au moyen de son poste de travail PW1 de visioconférence, ce dernier étant relié à un boîtier de connexion (non représenté) au réseau R qui peut être le RNIS (réseau numérique à intégration de service), le RTC (cas d'une connexion téléphonique), un réseau IP (Internet, Intranet, Extranet) ou un réseau radiomobile UMTS ;
   . cette connexion consiste pour l'utilisateur à charger à partir du serveur W le logiciel d'aide à l'intervenant (l'application Web) et à le lancer ; le serveur W comprenant un dispositif d'accès au réseau IP pour échanger des informations ou des commandes en particulier avec le poste de travail PW1, ce logiciel peut être téléchargé en se connectant via le réseau IP (Internet, Intranet, Extranet) au serveur W ;
- à la connexion au service, l'entrée de son nom et d'un mot de passe qui lui a été affecté lors de son abonnement à ce service pour déclencher l'enregistrement ;
   . le mot de passe est entré au moyen d'un périphérique entrée-sortie de son poste de travail (clavier ou souris );
- au démarrage de l'enregistrement, l'intervenant donne éventuellement un titre à sa séquence et, sous le contrôle du logiciel d'aide à l'intervenant qui lui indique la durée maximale de l'enregistrement, il lance la connexion en composant le numéro téléphonique du serveur SD et lance l'enregistrement à partir du logiciel d'aide à l'intervenant. Pour l'enregistrement l'intervenant utilise éventuellement des outils associés (caméra-document, magnétoscope). Pour arrêter l'enregistrement, l'intervenant active cet arrêt à partir du logiciel d'aide, puis l'intervenant met fin à la communication visiophonique en raccrochant (déconnexion) si la séquence n'a pas dépassé le temps imparti ; sinon le logiciel d'aide commande la déconnexion.

Selon les deux modes de réalisation, l'intervenant disposant d'un équipement informatique Eqi (lequel peut être séparé du poste de travail de visioconférence) comportant un accès au réseau IP et en particulier une boîte de messagerie, reçoit un message émis par le serveur W lui proposant de visualiser la séquence enregistrée ; la séquence est associée au message sous la forme d'un fichier joint.

Dans le premier mode de réalisation décrit, il peut ensuite à partir de son équipement informatique Eqi se connecter sur la page WEB du serveur W et s'identifier (par exemple et pour simplifier en donnant le numéro d'appel du serveur et le même mot de passe que celui qui lui a été affecté pour l'enregistrement des séquences).

L'intervenant peut alors introduire une date limite de consultation de l'information qu'il vient d'enregistrer (date de péremption).

Le logiciel d'aide à l'intervenant du deuxième mode de réalisation décrit permet à l'intervenant de consulter la liste des séquences audiovisuelles réalisées et éventuellement de les visualiser, de modifier leur titre, de supprimer celles de son choix et d'associer à chacune d'elles un mot de passe ne permettant la consultation qu'aux utilisateurs détenteurs du mot de passe correspondant.

Dans les deux modes de réalisation, l'intervenant peut également rédiger un message pour les destinataires en attachant en pièce jointe le fichier de la séquence.
- Conformément aux deux modes de réalisation, dès réception du message dans leur boite de messagerie, les utilisateurs-destinataires peuvent lire le message et visualiser dans une fenêtre (par exemple une fenêtre WINDOWS), la vidéo envoyée par l'intervenant.

A cette fin bien sûr, un logiciel de connexion au serveur W de diffusion de séquences audiovisuelles doit avoir préalablement été chargé dans les équipements informatiques des utilisateurs du service Eq1 .. Eqn. Ce logiciel de connexion peut par exemple avoir été téléchargé par le réseau IP.

Dans le cas du premier mode de réalisation décrit, ce logiciel permet de consulter les séquences codées selon le format H323.

Dans le cas du deuxième mode de réalisation décrit, les séquences audiovisuelles sont encodées selon un des formats de codage audiovisuel disponibles actuellement (〈〈 RealEncoder 〉〉, 〈〈 MPEG 〉〉, 〈〈 NetShow 〉〉, etc.). Le logiciel permettant de consulter les séquences codées sera alors choisi pour être compatible avec ce format.

Ce logiciel peut être téléchargé en se connectant via le réseau IP au serveur W.

Selon le deuxième mode de réalisation décrit, le serveur W comprend en outre un logiciel d'administration du système de stockage et de diffusion. Celui-ci permet à l'administrateur du système de gérer les comptes des intervenants.

Il permet en particulier de nommer automatiquement les séquences envoyées, le nom pouvant être défini par la date, l'heure et la seconde de la création de la séquence, complété d'une séquence de chiffres générés aléatoirement. L'ajout d'un tel nom rend fastidieuse la consultation d'une séquence par un utilisateur auquel elle n'est pas destinée et concourt ainsi à assurer un bon niveau de confidentialité du système.

Le logiciel d'administration permet aussi d'associer éventuellement un mot de passe d'un intervenant à l'ouverture d'une session d'enregistrement et de gérer les mots de passe, de gérer la durée de l'encodage, de calculer la durée des séquences et/ou la durée de leur stockage en vue de facturer le service de diffusion et de générer des statistiques.

Un développement HTML et C++ a été fait sur le serveur W, pour permettre selon le premier mode de réalisation décrit la création des fichiers faisant référence à la vidéo, la définition des dates de validité et d'envoi dans la boîte de messagerie de l'intervenant ; un développement analogue a été réalisé pour assurer sur le serveur W selon le deuxième mode de réalisation décrit, les fonctions du logiciel d'aide à l'intervenant et celles du logiciel d'administration du système de stockage et de diffusion.

Un développement a été réalisé, en utilisant les outils de développement (Tools Kit) fournis par Microsoft autour de NetMeeting, mais aussi en C++ pour le logiciel de connexion (plug-in), installé sur les équipements informatiques. Ce développement permet dans le cas du premier mode de réalisation décrit de lancer l'affichage et le contrôle de la durée de validité des consultations (mise en place d'un serveur). Dans le cas du deuxième mode de réalisation décrit, ce développement permet de lancer le logiciel d'aide à l'intervenant.

Pour le premier mode de réalisation décrit, un développement a été réalisé, sur le serveur de visioconférence S, pour l'acquisition et l'enregistrement depuis les terminaux de visioconférence et pour la diffusion vers la passerelle et cela de manière sécurisée. Dans le cas du deuxième mode de réalisation décrit, ces fonctions sont incluses dans le logiciel d'aide à l'intervenant.

L'ensemble de ces développements a été réalisé pour constituer un véritable produit totalement opérationnel et sécurisé, répondant à des besoins bien identifiés et qui met de surcroît en valeur la visioconférence, le réseau numérique d'intégration de service et ses possibilités de sécurisation (identification d'appels), les normes de la visioconférence H320 et H323, les atouts de l'internet et de l'intranet et des techniques IP associées.

## Revendications

1. Système de diffusion de séquences audiovisuelles par messagerie électronique sur un réseau IP, caractérisé en ce qu'il comprend :
- un dispositif (SD) de stockage et de diffusion de séquences audiovisuelles pré-enregistrées,
- au moins un poste de travail (PW1) comportant un terminal de visioconférence pour l'acquisition desdites séquences, et/ou un téléphone (T) pour l'acquisition des séquences audio pures, l'enregistrement et la transmission au dispositif (SD),
- un ou plusieurs équipements informatiques (Eq1, Eqk) susceptibles de recevoir les séquences audiovisuelles par messagerie électronique à travers le réseau IP.

2. Système selon la revendication 1, caractérisé en ce que le dispositif (SD) de stockage et de diffusion comprend :
- au moins un dispositif (E1) pour l'encodage en un format de codage audiovisuel des séquences audiovisuelles provenant du (ou des) poste(s) de travail (PW1) et la transmission au serveur (SAV) via le réseau IP,
- un serveur (SAV) de séquences audiovisuelles pour le stockage et la diffusion sur le réseau IP à destination des équipements informatiques des séquences audiovisuelles pré-enregistrées et encodées selon un format de codage audiovisuel.

3. Système selon la revendication 2, caractérisé en ce que le dispositif (E1) pour l'encodage des séquences audiovisuelles comprend :
- au moins un terminal (V1) de visioconférence pour le codage selon un format intermédiaire des séquences audiovisuelles émises par le poste de travail (PW1),
- au moins un serveur (SE1) pour l'encodage en un format de codage audiovisuel des séquences audiovisuelles provenant du (ou des) terminal(aux) (V1) de visioconférence et la transmission au serveur (SAV) via le réseau IP.

4. Système selon la revendication 1, caractérisé en ce que le dispositif (SD) de stockage et de diffusion comprend :
- un serveur de séquences audiovisuelles (S) pour le stockage et la diffusion de séquences audiovisuelles pré-enregistrées selon le format de codage de la visioconférence,
- une passerelle (P) de transcodage des séquences audiovisuelles pour le transport sur réseau IP à destination des équipements informatiques.

5. Système selon l'une des revendications précédentes, caractérisé en ce que la ou les séquences stockées sur le dispositif (SD) de stockage et de diffusion sont diffusées à la demande du ou des équipements informatiques, ledit ou lesdits équipements comportant un logiciel de connexion audit dispositif (SD) comprenant un numéro d'identification de ladite séquence pour l'ouverture d'une session permettant la consultation et le contrôle par l'utilisateur, de séquences audiovisuelles sur ledit dispositif (SD).

6. Système selon la revendication 5, caractérisé en ce que à l'ouverture de la session par un équipement informatique, le logiciel de connexion permet d'afficher une image dans une fenêtre.

7. Système selon la revendication 6, caractérisé en ce que, dès que la connexion est établie, le dispositif de stockage et de diffusion (SD) transmet une image correspondant à une fenêtre dans laquelle s'affichent les images enregistrées.

8. Système selon l'une des revendications 5 à 7, caractérisé en ce que le logiciel de connexion est téléchargeable au moyen du réseau IP.

9. Système selon l'une des revendications précédentes, caractérisé en ce que le poste de travail (PW1) comporte en outre un micro-ordinateur multimedia (Eqᵢ).

10. Système selon l'une des revendications précédentes caractérisé en ce que la transmission au dispositif (SD) est réalisée au moyen d'un réseau de transmission numérique à intégration de service, téléphonique commuté, IP ou radiomobile.

11. Système selon l'une des revendications précédentes, caractérisé en ce que le poste de travail (PW1) comporte un logiciel de connexion au dispositif (SD) pour l'ouverture d'une session d'enregistrement et en ce que cette ouverture n'est autorisée qu'après vérification d'un mot de passe d'un intervenant.

12. Serveur de gestion d'un système de diffusion selon l'une des revendications 1 à 10, caractérisé en ce qu'il comprend :
un dispositif d'accès au réseau pour échanger des informations et des commandes avec le système de diffusion,
un logiciel d'aide à l'intervenant,
un logiciel d'administration du système de diffusion.

13. Serveur selon la revendication précédente, caractérisé en ce que le logiciel d'aide à l'intervenant est apte à lancer l'encodage et le stopper.

14. Serveur selon l'une des revendications 12 ou 13, caractérisé en ce que le logiciel d'aide à l'intervenant est apte à remettre dans la boîte de messagerie électronique de l'intervenant un message électronique comportant en pièce jointe un fichier faisant référence à la séquence audiovisuelle enregistrée.

15. Serveur selon l'une des revendications 12 à 14, caractérisé en ce que le logiciel d'aide à l'intervenant est apte à permettre la consultation de la liste des séquences audiovisuelles réalisées et leur visualisation.

16. Serveur selon l'une des revendications 12 à 15, caractérisé en ce que le logiciel d'aide à l'intervenant est aussi apte à permettre la Suppression de séquences audiovisuelles.

17. Serveur selon l'une des revendications 12 à 16, caractérisé en ce que le logiciel d'aide à l'intervenant est aussi apte à permettre l'association d'un mot de passe aux séquences enregistrées n'autorisant la consultation qu'aux utilisateurs détenteurs de ce mot de passe.

18. Serveur selon l'une des revendications 12 à 17, caractérisé en ce que le logiciel d'aide à l'intervenant est aussi apte à attacher un fichier à la séquence enregistrée sur le dispositif de stockage et de diffusion.

19. Serveur selon l'une des revendications 12 à 18, caractérisé en ce que le logiciel d'administration du système de diffusion est apte à associer un mot de passe d'un intervenant à l'ouverture d'une session d'enregistrement et à gérer les mots de passe.

20. Serveur selon l'une des revendications 12 à 19, caractérisé en ce que le logiciel d'administration du système de diffusion est apte à gérer la durée de l'encodage.

21. Serveur selon l'une des revendications 12 à 20, caractérisé en ce que le logiciel d'administration du système de diffusion est apte à calculer la durée des séquences et/ou la durée de leur stockage.

22. Serveur selon l'une des revendications 12 à 21, caractérisé en ce que le logiciel d'administration du système de diffusion est apte à générer des statistiques.

23. Serveur selon l'une des revendications 12 à 22, caractérisé en ce que le dispositif d'accès au réseau est apte à télécharger le logiciel d'aide à l'intervenant sur le poste (PW1) de l'intervenant au moyen du réseau IP.
